# EUROPEAN PATENT SPECIFICATION

(11) **EP 2 301 225 B1**
(45) Date of publication and mention of the grant of the patent: **09.05.2012**
(21) Application number: 09786520.8
(22) Date of filing: 03.07.2009
(51) Int. Cl.: H04L 29/08

(54) **METHODS, TELECOMMUNICATIONS NODE, AND USER EQUIPMENT FOR TRANSMISSION OF USER IDENTIFIER**
VERFAHREN, TELEKOMMUNIKATIONSKNOTEN UND BENUTZERVORRICHTUNG ZUR ÜBERTRAGUNG EINES BENUTZERIDENTIFIKATORS
PROCÉDÉS, NOEUD DE TÉLÉCOMMUNICATION ET ÉQUIPEMENT UTILISATEUR POUR LA TRANSMISSION D'UN IDENTIFIANT D'UTILISATEUR

(30) Priority: 11.07.2008 US 171750
(43) Date of publication of application: 30.03.2011
(73) Proprietor: Telefonaktiebolaget L M Ericsson (publ), 164 83 Stockholm (SE)
(72) Inventor: HOSSAIN, Nazin, Brossard Québec J4Y 3G1 (CA)
(74) Representative: Röthinger, Rainer
(86) International application number: PCT/IB2009/052923
(87) International publication number: WO 2010/004498

(56) References cited:
- EP-A- 1 549 024
- WO-A-2004/030434
- WO-A-2005/022863
- WO-A-2007/021111
- US-A1- 2005 213 537
- OPEN MOBILE ALLIANCE: "IMPS SIP/SIMPLE Interworking Function Requirements Draft Version 1.0"[Online] 14 August 2007 (2007-08-14), pages 1-56, XP002564449 Retrieved from the Internet: URL:http://member.openmobilealliance.org/f tp/Public_documents/MWG/IM/Permanent_docum ents/OMA-RD-IMPS_SIP_SIMPLE-V1_0-20070814- D.zip> [retrieved on 2010-01-21] cited in the application
- GSM ASSOCIATION: "SIP SIMPLE Interconnect Technical Implementation Document for Personal IM"[Online] 18 October 2006 (2006-10-18), pages 1-30, XP002564450 Retrieved from the Internet: URL:http://www.gsmworld.com/documents/gsma _sip_simple.pdf> [retrieved on 2010-01-21] cited in the application
- ZHANG ET AL: "Inter-working between SIMPLE and IMPS" COMPUTER STANDARDS AND INTERFACES, ELSEVIER SEQUOIA. LAUSANNE, CH, vol. 29, no. 5, 22 May 2007 (2007-05-22), pages 584-600, XP022088564 ISSN: 0920-5489

## Description

### Technical Field

The present invention relates to the area of telecommunications, and in particular to the area of communications addressing.

### Background

Mobile Instant Messaging (IM) based on Presence is expected to become more and more widespread in the years to come. The Open Mobile Alliance (OMA) provides a standard set of specifications, called Instant Messaging and Presence Services (IMPS) that telecom operators can use to host IMPS services for mobile terminals. The Wireless Village consortium developed the first cut of the specifications. After Wireless Village was merged with OMA, its specifications became the OMA IMPS 1.0 specifications. IMPS is widely deployed but not necessarily marketed. Interworking between several operators' IMPS platforms is being performed under the GSM Association (GSMA) initiative that encourages interworking and deployment of IM. Vanilla terminals (i.e simpler phones) often have IMPS clients. On Nokia terminals, the chat client is accessed via the "My Presence" menu. On Sony Ericsson terminals, it's called "My Friends", while on Motorola terminals it's called "IM".

OMA also provides technical specifications using the Session Initiation Protocol (SIP) for Instant Messaging and Presence Leveraging Extensions (SIMPLE) extensions to provide IMS based presence services, such as - for example - defined by OMA Presence SIMPLE V1.0.1, and IM services such as - for example - defined by OMA SIMPLE IM V1.0. On the other side, presence and messaging services based on the IP Multimedia Subsystem (IMS) are seen as a longer term solution and, for now, many systems only implement IMPS as defined by the OMA specifications. Thus, many operators interested in providing mobile IM based on Presence are deploying IMPS solutions.

Then again, some telecom manufacturers offer only IMS-based Presence and Instant Messaging (IMS-M) products, enhanced with an inter-working solution between IMS-M (based on SIP/SIMPLE) and IMPS. This inter-working capability is deemed important for systems to be able to inter-communicate. However, it has not been completely standardized yet and, as a result, there is currently no smooth interoperability between IMS-M and IMPS.

In order to facilitate such interoperability, the GSMA issued a draft guideline specification, called "DRAFT SIP SIMPLE Interconnect Technical Implementation Document for Personal IM", document number IPIAG Gen Doc 005_06r1, dated 18th October 2006, (all of which is hereby included by reference), which describes the technical implementation details and call flows for interconnecting IM communities across operators. The specification dictates that different operators with different IM solutions should use SIP/SIMPLE protocols to communicate across a Network-to-Network Interface (NNI). In particular, the GSMA specifications (as e.g. shown in section 4.1) include the sequence of messages between the operator's inter-working gateways when a user in one system adds a contact to his/her terminal's contact book (also called address book or contact list), when the contact belongs to a user in the other system. This is also aligned with the OMA specifications (currently in initial draft version). Such addition of a user in a terminal contact book may serve subsequently for initiating communications from that terminal with a given user from the other network.

Typically, for both IMS and IMPS systems, IM users are identified with a user identity in the form of a Uniform Resource Locator (URI), alike "UserPart@domainPart", such as for example John.Doe@OperatorX.com. However, it is also known and possible to identify a user by the telephone number of his mobile terminal (the Mobile Station International Subscriber Directory Number, or MSISDN). As a result, in both IMS and IMPS networks, a user may have two identities (including when they use their mobile terminals to access the IM service).

According to the GSMA specification, when the user's MSISDN is used to contact a user from another network for the purpose of, for example Presence or IM, in the process of verifying the user, the other network is required to return the user identifier (user ID, e.g. the Uniform Resource Locator, or URL) associated with the MSISDN, and all subsequent signalling related to that user is required to use the user's URL, thus requiring the network to remember the association between the originally signalled MSISDN and the subsequently used URL. This is specified in section 4.1.1.1 of the GSMA specification mentioned above and also in section 5.7 of OMA specification called "IMPS SIP/SIMPLE Interworking Function Requirements", Draft Version 1.0, dated 14 August 2007, document number OMA-RD-IMPS_SIP_SIMPLE-V1_0-20070814-D, all of which is hereby included by reference.

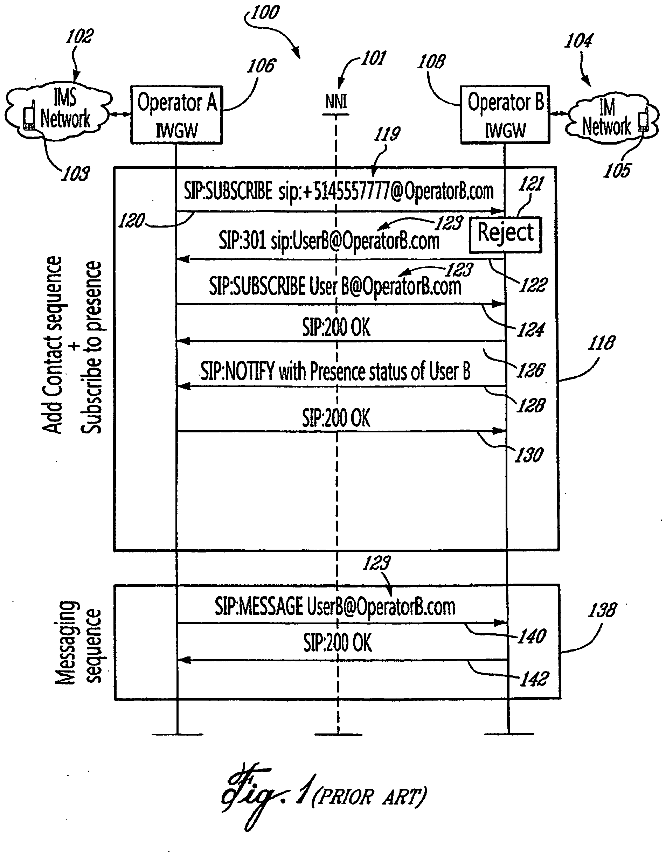

Reference is now made to Figure 1 (Prior Art) that shows an example of the interworking problem existing between an exemplary system 102 for IMS-M (IMS-M system) and a system 104 for IMPS (IMPS system). Shown in Figure 1 is a highly simplified view of a global network 100 comprising the IMS-based system 102 providing IMS-M services (not all of which is shown for simplicity purposes) connected to the IMPS system 104 (not all of which is shown for simplicity purposes) providing IMPS services via an NNI 101. The IMS-M system 102 may comprise a radio access network composed of base stations and base station controllers, and a core network including various nodes, routers, and switches such as for example Call State Control Functions (CSCFs) that provide session control for subscribers accessing services within the IMS. In essence, the CSCFs may be SIP Servers having the responsibility for interacting with network databases such as the Home Subscriber Server (HSS) for mobility, and with the Access, Authorization and Accounting (AAA) servers for authorisations and security. Another example of IMS nodes are the Session Border Gateway (SBG), a device or application that governs the manner in which calls or sessions, are initiated, conducted and terminated in the network, and the HSS that includes subscriber data related to services and charging. A Presence and Group Management (PGM) is also be present in order to provide presence services, as it is known in the art. The IMPS network 104, on its side, comprises one or more IMPS server and a plurality of IMPS clients (the UEs).

In the network 100, two exemplary users are identified as follows:
- An IMS user, User A 103, in Operator A's IMS-M network 102 (providing IMS-based IM services) has the following identities:
   - sip:UserA@OperatorA.com (describing the user's SIP URL)
   - MSISDN, + 1-514-555-3333 (describing the user's MSISDN)
- An IMPS user, User B 105, in Operator B's IM network 104 (providing IMPS services) has the following identities:
   - wv:UserB@OperatorB.com (describing the user's Wireless Village URL)
   - MSISDN, +1-514-555-7777 (describing the user's MSISDN)

The User A 103 in the IMS-M system 102 may know User B 105 of the IMPS system 108 only by User B's MSISDN, and may want to initiate presence-based IM with User B using that MSISDN. The sequence of SIP requests over the NNI 101, when User A wants to add User B as a contact in his contact book, using User B's MSISDN (complying with both GSMA specification and OMA specification) and then sending an IM to user B (using his MSISDN) at a later time is as follows:
When the user A 103 adds user B 105's MSISDN in his contact list and wants to perform IM based on the presence information of user B (e.g. to send an IM message to user B when his presence information shows him, e.g., as being active and connected), user A 103 first acts to i) (optionally) add user B identity to his contact list and ii) to subscribe for user B 105's presence information, action 118. For this purpose, user A 103, once he/she added user B 105 MSISDN to his/her contact list (action not specifically shown in Fig. 1) issues a SIP SUBSCRIBE message 120 destined to the MSISDN 119 of user B. The operator A's Interworking Gateway (IWGW) 106 receives the presence subscription 120 that contains the user B 105's MSISDN 119 and relays it to the operator B's IWGW 108 over the network-to-network (NNI) interface 101. However, the IWGW 108 rejects, in action 121, the subscription for presence information because it uses the MSISNDN 119, rather then the user B's URL expected by the IWGW 108. However, the IWGW 108 is capable to map the user B's MSISDN received in action 120 to the user B's URL that is known to network 104. As a consequence, in action 122 the operator B's IWGW 108 sends back a SIP 301 message that returns to the originator the user B's URL 123 to be used for such presence subscriptions, in line it the above-mentioned specifications. In action 124, the IWGW 106 rather uses the newly received URL 123 of user B 103 in order to subscribe to presence information related to that user. Proper reception of the message 124 is confirmed via the SIP 200 OK message 126 by the IWGW 108 and, in action 128, the IWGW 108 responds to the subscription for presence information by sending a SIP NOTIFY message including the presence status information of user B 103. Once the gateway 106 further relays to the user A 103 the presence status information of user B 105 (that sequence is not shown in Fig. 1 for simplicity purposes), a messaging sequence 138 can take place where the user A 103 can communicate, for example instant messages to user B, as he now knows the presence status of user B 105 (such as for example being available for instant messaging). Message 140 is an exemplary SIP MESSAGE message via which the user A communicates instant messages with user B.

Currently, there are no specifications that dictate how, in this example, Operator A's IMS network 102 would maintain the mapping between User B's MSISDN 119 that is originally known to User A 103, and the user B's URL 123, which is returned from User B's network 104 in action 122. It is indirectly expected (as hinted by section 5.7 of OMA's technical specification) that User A terminal's contact list would maintain the mapping, i.e. would have the capability to store both the User B's MSISDN 119 and the User B's URL 123. Consequently, User A's IMS client would be expected to access (and possibly store) a contact list with the mapping, and use User B's URL 123 for IM (alike the action 138) and presence subscriptions.

However, this is not possible for many terminals in today's market. Many terminals, PDAs, and mobile phones that host IMS clients use address books as starting points for initiating communications, including IM, and many such devices have address books that do not have the capability of storing IM user identifiers (URLs) as a contact. This is partially due to the fact that, historically, mobile communications were held using the MSISDN only, so many current terminals' address books were only designed to store the users' MSISDNs, and not the more recent URLs identifiers. Thus, such devices cannot store the mapping between the MSISDNs and the User IDs, for given users, and consequently will always initiate IM using the MSISDNs. This renders impossible proper IM communications alike the one described in action 138.

Although there is no solution as the one proposed by the present invention, the international publication number WO2005/022863A1 bears some relation with the field of the present invention. This publication teaches a method for managing presence services in a communication system making use of heterogeneous protocols. Each communication subsystem supports a presence service that operates according to different presence protocols, such as for example using wireless village specifications or SIP based specifications. According to the publication, interoperability between the different presences services is obtained by converting a presence message generated at an originating subsystem from the local protocol to another protocol. Presence messages including, for example, presence documents are converted from one protocol to another based on predefined schemes. However, the teaching of this publication is limited to a simple protocol to protocol conversion of presence related messages and stops short of teaching or suggesting the present invention.

The international publication WO2004/030434 also bears some relation with the field of the presence invention. This international publication teaches a mapping functionality between a Wireless Village server and a presence messaging and group server of an IMS system, in order to permit interoperability between Wireless Village and IMS clients for IMPS services. This is destined for operators who have deployed both IMS and Wireless Village services. However, the teaching of this publication is also limited to a conversion from one given protocol to another given protocol with the purpose of enabling instant message services based on presence between heterogeneous networks and, as such, this publication also stops short of teaching or suggesting the present invention.

### Summary

Accordingly, it should be rightly appreciated that in order to overcome the deficiencies and the short comings of the existing solutions, it would be advantageous to have a solution that allows the use of mobile terminals and other types of devices which contact book cannot contain both the MSISDN identifier and another user ID (e.g. the contacts URL) to handle communications with another party. The present invention provides such a method and solution.

In one aspect, the present invention is a method of communication between first and second user terminals the method starting with the receiving of a presence document comprising presence information related to the first user terminal. The method then allows for the insertion in the presence document of a URL of the first user terminal, and for the sending of the presence document comprising the URL of the first user terminal to the second user terminal, whereby the second user terminal uses the URL of the first user terminal obtained from the presence document to subsequently handle communications with the first user terminal.

In another aspect, the present invention is a method of communication between first and second user terminals, the method starting with the sending of a subscription request message for presence information related to the first user terminal, the subscription request message being addressed to an MSISDN of the first user terminal. Responsive to the subscription request message, a presence document is received comprising presence information related to the first user terminal, the presence document further comprising a URL of the first user terminal. The URL of the first user terminal obtained from the presence document of the first user terminal is then uses to handle a communication with the first user terminal.

In yet another aspect, the present invention is a computer-operated telecommunication node comprising a communication module receiving a presence document comprising presence information related to a first user terminal. The node further comprises a service logic module inserting in the presence document a URL of the first user terminal. The communication module sends the presence document comprising the URL of the first user terminal to a second user terminal, whereby the second user terminal uses the URL of the first user terminal obtained from the presence document to subsequently handle communications with the first user terminal.

In yet another aspect, the invention is a User Equipment (UE) comprising a communication module sending a subscription request message for presence information related to another UE, the subscription request message being addressed to an MSISDN of the other UE, the communication module, responsive to the subscription request message, receiving a presence document comprising presence information related to the other UE, the presence document further comprising a Uniform Resource Locator (URL) of the other UE. The presence module then stores the presence document received from the communication module, and the communication module further uses the URL of the other UE obtained from the presence document to handle communications with the other UE.

### Brief Description of the Drawings

For a more detailed understanding of the invention, for further objects and advantages thereof, reference can now be made to the following description, taken in conjunction with the accompanying drawings, in which:
Figure 1 (Prior Art) is a simplified high-level nodal operation and signal flow diagram of a prior art implementation of IM services;
Figure 2 is a nodal operation and signal flow diagram of an exemplary IM implementation according to the preferred embodiment of the present invention;
Figure 3 is a high-level node diagram of an exemplary telecommunications node (e.g. gateway, Call State Control Function, User Equipment) according to the preferred embodiment of the present invention; and
Figure 4 is a high-level node diagram of an exemplary user equipment according to the preferred embodiment of the present invention.

### Detailed Description

The innovative teachings of the present invention will be described with particular reference to various exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views.

Accordingly, in order to solve the aforementioned deficiencies of the prior art, the present invention proposes a new method in a telecommunications node that allows the use of legacy User Equipments (UEs) which contact book cannot store the mapping between an MSISDN identifier and a URL identifier of a given user for instant messaging and other types of communications that require the us of the URL. According to a preferred embodiment of the invention, the user's URL is not stored as usual with newer devices in the address book of that given device, but rather propagated and stored in a presence document that the user receives. According to the invention, the mapping between the originally known MSISDN and URL of a given user is communicated as part of the IMPS users presence information, and as a consequence, even in cases when the presence subscription of an IMS user to an IMPS user is initiated using the IMPS user's MSISDN, the presence document returned to the IMS user related to the IMPS user's presence information includes, along the presence status of the IMPS user, also the IMPS user's URL identifier which can then be used to establish subsequent communications (e.g. IM communications).

According to the invention, an inter-working gateway of an IMS network may introduce the URL information into the presence document that is being propagated to the requesting IMS user. Upon receipt of the presence document of the IMPS user by the IMS user, the later stores the presence document that includes the URL and subsequently accesses the URL from the presence document in order to establish communications, such as for example instant messaging communications, with the IMPS user, as the presence document (possibly updated from time to time or as requested) is persistently stored in the IMS device for the entire duration of the presence subscription. Thus, presence-based communications, such as for example instant messaging based on presence, can be always initiated as long a presence document of the user is found. For example, the presence subscription of an IMS user to presence information associated with an IMPS user may be initiated soon after the IMS user registers into the IMS network, and may be maintained until the IMS deregisters from the IMS network. In such a circumstance, the presence document containing the URL of the IMPS user is stored by the IMS user so that he can initiate communications using the URL of the IMPS user at any moment.

The present invention may be, for example, useful for legacy devices such as for example mobile stations, user equipments, PDAs, and other type of mobile terminals that include legacy address books that can only store for example the MSISDN of users, and not, for example the users' URLs. The present invention can also be useful for other types of devices where it is deemed more convenient, for various reasons, to use the URL stored in the presence document associated with a given user in order to initiate communications.

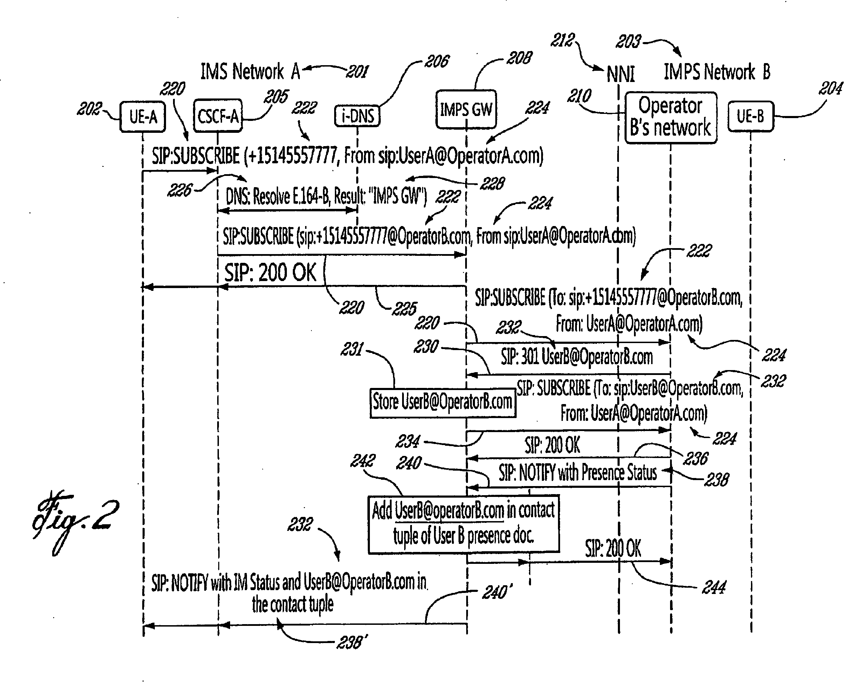

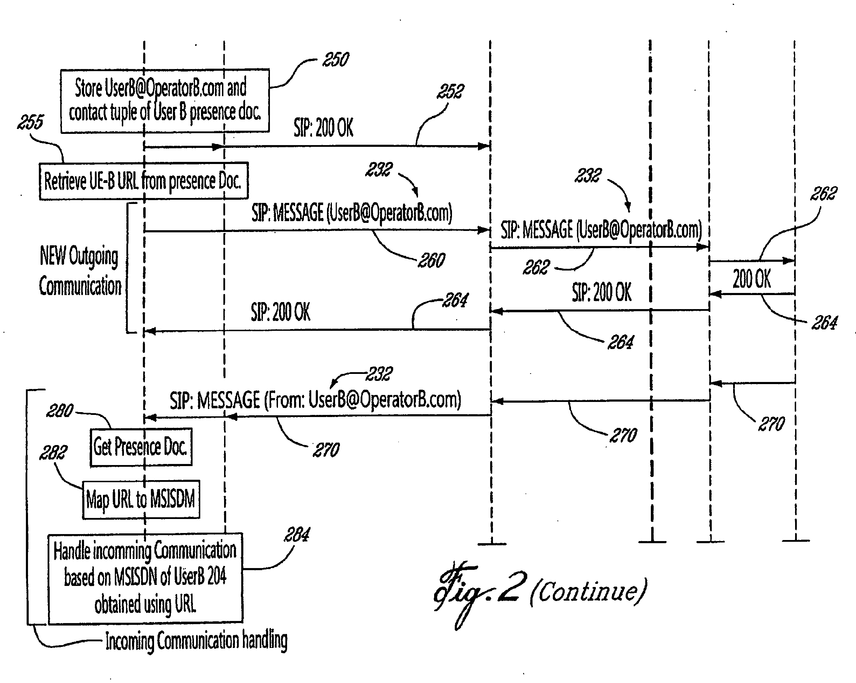

Reference is now made to Figure 2, which shows a simplified nodal operation and signal flow diagram of an exemplary telecommunication system 200 implementing the preferred embodiment of the invention. First, a User Equipment (UE) A 202 is to communicate with another user's UE B 204. The UE 202 is an IMS user and is part of an IMS network A 201 that comprises, for example a Call State Control Function (CSCF) 205 for handling control plane communications on behalf of UE A 202, a (Domain Name Server (DNS) entity 206 capable of resolving addressing of various messages exchanged in the network 201 and an IMPS gateway 208 responsible for communications between the IMS network A 201 and network B 203. On the other side, the IMPS network B 203 comprises a UE B 204 which, for the purpose of the presence example, is an IMPS UE. Furthermore, the IMPS network 203 comprises a core network part 210 which contains the appropriate telecommunications nodes and functions for supporting communication for UE B 204 (it is to be understood that other UEs may also be present in both networks 201 and 203 although not shown for simplicity purposes).

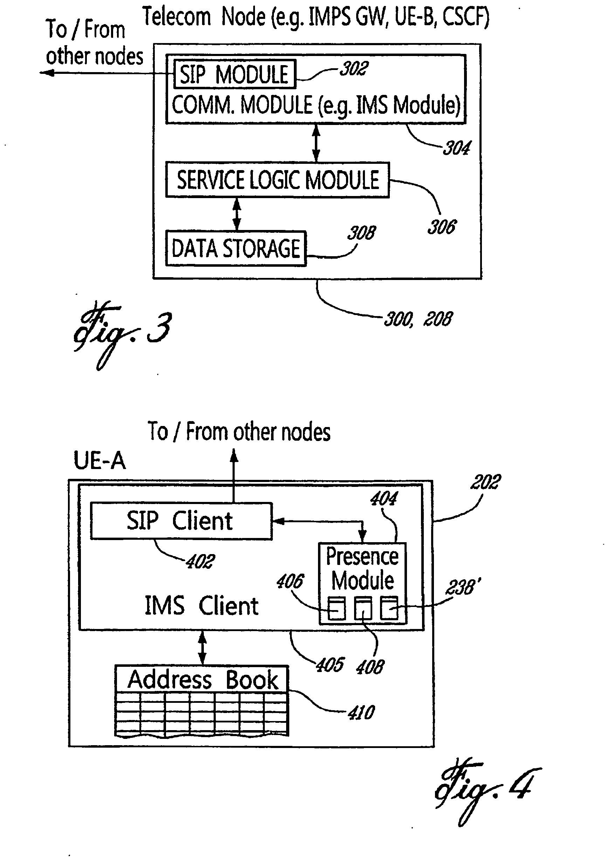

Reference is now further made jointly to Figure 3 that shows a high-level node diagram of an exemplary telecommunications node 300 (e.g. gateway, Call State Control Function, User Equipment) according to the preferred embodiment of the present invention, which may comprise, for example, the IMPS gateway 208 shown in Figure 2. The telecommunications node 300 may include a communication module 304 such as for example an IMS communication module 304 capable of handling IMS based communications (SIP-based communications) with external networks and nodes. The communication module 304 may comprise a SIP communications module 302 for handling SIP-based communications with, for example, the network A 201 and with the IMPS network B 203. Furthermore, the telecommunication node 300 may comprise a service logic module 306, in communication with IMS module 304 and also connected to a data storage 308, which detailed functioning is yet to be described. The data storage module may include a memory (RAM), a disk, or preferably a cache.

Reference now further jointly made to Figure 4, which shows the IMS UE A 202 and its exemplary internal structure. The UE A 202 may comprise an address book 410 ( also called sometimes a contact book or contact list) for storing information related to contacts such as for example, telephone numbers, names, addresses and the likes. The UE 202 may further include an IMS client 405 responsible for supporting IMS-based communications on behalf of the UE, with external networks. The IMS client 405 may include a SIP client module 402 capable of supporting incoming and outgoing SIP based communications with other nodes and networks. Finally, the UE A 202 may further include a presence module 404 that handles and possibly stores presence information sent and received by the UE A 202. The presence module 404 includes presence documents 406, and 408 that comprise presence information related to various other UEs. Such presence documents may be, in some implementations, stored either in the presence module 404 or partly or totally, in the address book 410 as they may relate to particular contacts stored in the address book 410.

With reference being now made jointly to Figures 2, 3, and 4, the IMS UE A 202 desires to subscribe to presence information related to the IMPS UE B 204. In order to obtain such presence information related to the UE B 204 and then to initiate a communication such as for example an IM communication with UE B 204 based on its present status, the UE A 202 first subscribes to the presence information. For this purpose, the UE A 202 issues a SIP SUBSCRIBE message 220 which comprises the MSISDN 222 of the UE B 204. The SIP SUBSCRIBE message 220 also comprises a field 224 that indicates the SIP URL of the originator, i.e. of the UE A 202. The message 220 is sent to the CSCF A 205 which resolves its DNS address and obtains, in action 226, the address 228 of the IMPS gateway 208 that is to be contacted in order to relay the SIP SUBSCRIBE message 220 to the IMPS network B 203 (which serves the intended recipient of the message 220, which is the UE B 204). Thus, once the CSCF A 205 obtains the address of the IMPS gateway 208 in action 226, it relays the SIP SUBSCRIBE message 220 to the gateway 208. Receipt of the message is confirmed by the SIP module 302 of the gateway 208 to the UE A 202 using a SIP 200 OK message 225. The SIP module 302 of the IMPS gateway 208 further relays the SIP SUBSCRIBE message 220 to the IMPS network 203 using the same recipient identifier, i.e. the MSISDN 222 of the UE B 204. Because the IMPS network 203 expects SIP subscription messages to be addressed to SIP URLs, and not to MSISDN identifiers as it is the case herein, the network 203 responds, in action 230, to the SIP SUBSCRIBE message 220 with a SIP 301 message that indicates the subscription 220 was not accepted and that also returns the URL 232 of the user B 204 as known to the network 203. For this purpose, the network 203 can perform a mapping determination between the MSISDN 222 and the user B's URL 232 subsequent to action 220, i.e. to determine the user B 204 URL 232 based on the user B 204 MSISDN 222 received in action 220. In action 231, the SIP module 302 of the IMPS gateway 208 receives the SIP URL identifier 232 of the UE B 204, and the service logic module 306 instructs its storage in the data storage module 308. Such storage may be done temporarily, for the duration of the SUBSCRIBE session started in action 220, in order to allow the yet-to-be-described addition of that URL 232 into the user B's presence document. The SIP module 302 further issues a new SIP SUBSCRIBE message 234 that this time properly identifies the user B 204 using his URL identifier 232. Proper receipt of the SIP SUBSCRIBE message 234 is confirmed by the network 203 using a SIP 200 OK message 236. The presence information 238 subscribed to is returned by the network 210 to the IMPS gateway 208 in action 240. The SIP NOTIFY message 240 may comprise a presence document containing the presence information 238, for example in the form of a presence tuple. Such presence information 238 may comprise the presence status of the UE B 204 as it is known to the network 203, for example user B 204 is present, or user B is not present, or user B is active, or user B is active for IM communications but not for voice chat, etc. The SIP module 302 of the gateway 208 receives the presence document 238 and in action 242, the service logic module 306 instructs the insertion of the URL 232 of the user B 204, obtained in previous action 231, in the presence document 238 related to the user B 204. For example, the presence document associated to the IMPS user B 204 identified with the MSISDN 222 "+1-514-555-7777" may have the following format, wherein the user B 204 URL 232 is inserted at line 13 of the document:

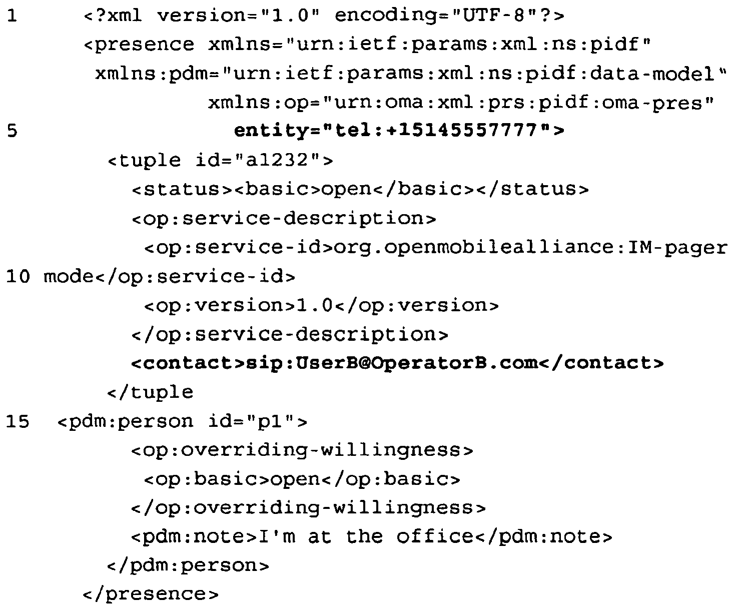

In action 244, the SIP module 302 of the gateway 208 confirms proper receipt of the presence document 238 using a SIP 200 OK message sent back to the network 210. Further, in action 240', the SIP module 302 of the gateway 208 relays a new SIP NOTIFY message to the UE A 202, which contains the presence document 238' related to the UE B 204, as modified in the action 242 to include the UE B 204 URL identifier 232. The UE A 202 receives the SIP NOTIFY message 240' via its own SIP client 402, and in action 250 stores the presence document 238' related to the UE B 204 which also include the UE Bs URL 232, in the presence module 404.

With reference being made mainly to Figure 4, the SIP client 402 of the UE A 202 may receive the SIP NOTIFY message 240' and save the presence document 238' in the presence module 404. The SIP client 402 may further confirm the proper receipt of the SIP NOTIFY message 240' using a SIP 200 OK message 252 sent back to the IMPS gateway 208.

Now that the UE A 202 has stored the presence document 238' of the UE B 204, including not only the presence information of the UE B 204 but also the UE B's URL identifier 232, the UE A 202 can use the URL identifier 232 for multiple purposes. For example, the UE A 202 may initiate subsequent communications with UE B 204 using the UE B's URL identifier 232, instead of the UE B's already known MSISDN 222. For example, it is assumed in the present exemplary scenario that the UE A 202 desires to initiate an IM communication with the UE B 204. For this purpose, in action 255, the SIP client 402 of the UE A 202 extracts from the presence document 238' associated with the UE B 204 the UE B's URL 232, and creates a SIP MESSAGE message 260 intended for the UE B 204 and destined to the URL 232. The message is sent to the gateway 208, action 260, which relays it further to the network 210 and finally to the UE B 204. Proper receipt of this IM communication using the SIP MESSAGE message is confirmed using a SIP 200 OK message 264 sent back from the UE B 204 up to the UE A 202 via the gateway 208.

It is to be understood, that although the present exemplary scenario is described with reference to an instant message communication, such as exemplified in actions 260 and 262, other types of communications can also be established using the UE B URL obtained by the UE A 202 from the presence document 238' stored therein. Such communications can include, for example voice communications, email messages, voice chats, whiteboard sharing, etc.

According to yet another aspect of the present invention, the URL 232 of the UE B 204 stored in the presence document by the UE A 202 can also be used for handling incoming communications by the UE A 202. For example, in action 270, the UE A 202 itself may receive a new incoming communication from the UE B 204. Such a communication may be an IM based on a SIP MESSAGE message, or other type of communication such as for example a SIP INVITE requesting the start of a new voice communication, etc. The communication 270 can be addressed to the UE A 202 and may comprise the originator information related to the user B 204 in the form of the user B URL 232. When receiving the communication 270, the SIP client 402 of the user A 202 may act first to extract the user B URL 232 from the incoming message 270. Noticing that the address book 430 of the UE A 202 contains no reference to such URL 232 (because for example the address book is not configured to store also the URL, in addition to the MSISDN of a user), the SIP client may obtain the presence document 238' associated to the user B's URL 232 from the presence module 404 (or alternatively from the address book 410 if stored therein), action 280. The URL 232 is found in the presence document 238' of the User B 204 and then the UE A's SIP client 402 can use the URL information from the presence document 238' to map in action 282 the user B URL 232 to the MSISDN 222 of the user B 204. Now provided with the MSISDN 222 information related to the user B 204, the UE A 202 can handle the incoming communication 270 based on the MSISDN 222 information, action 284. Such handling can include, for example, displaying the caller identifier name, which can be obtained from the address book 410 based on the MSISDN 222 stored therein, or other types of specific handling of the communication 270 based on the MSISDN 222 (such as for example, call divert, call forwarding, busy tone, etc.)

Therefore, with the present invention, it becomes possible to persistently store information regarding the URLs of contacts in a UE even when the native address book of a given UE is not configured to support such storing. The invention proposes to provide such UEs with presence documents related to contacts that also include the contacts' URL information so that when such presence document are stored by a certain UE, the URL information can be used either for initiating subsequent communications using the stored URL, or for handling incoming communications identified as originating from those URLs.

Therefore, it becomes apparent, that according to the present invention there is provided advantageous methods and telecommunications node for transmitting a presence document, such as for example a presence tuple, that contains not only the MSISDN of a given user but also his/her URL identifier, so that to enable the use of that URL identifier for subsequent communications with that user, or for properly handling incoming communications.

Based upon the foregoing, it should now be apparent to those of ordinary skills in the art that the present invention provides an advantageous solution. Although the system and method of the present invention have been described with particular reference to certain type of messages and nodes, it should be realized upon reference hereto that the innovative teachings contained herein are not necessarily limited thereto and may be implemented advantageously in various manners. For example, the UE 202 and the telecommunications node 300/208 may be implemented along with their described components (from Figs 3 and 4) using software modules, hardware modules, or any combination of computer-operated software modules and hardware modules. Typically but not necessarily, those nodes may be computer-operated terminals or nodes running an operating system that enables the use of various hardware and/or software modules with instructions for performing the described actions. It is believed that the operation and construction of the present invention will be apparent from the foregoing description. While the method and system shown and described have been characterized as being preferred, it will be readily apparent that various changes and modifications could be made therein without departing from the scope of the invention as defined by the claims set forth hereinbelow. Although several preferred embodiments of the method and system of the present invention have been illustrated in the accompanying Drawings and described in the foregoing Detailed Description, it will be understood that the invention is not limited to the embodiments disclosed, but is capable of numerous rearrangements, modifications and substitutions without departing from the scope of the invention as set forth and defined by the following claims.

## Claims

1. A method of communication between a first and second user terminals (202, 204), comprising the steps of:
a. receiving a presence document (238) comprising presence information related to the first user terminal (204);
b. inserting in the presence document (238) a Uniform Resource Locator (URL) (232) of the first user terminal (204); and
c. sending the presence document (238) comprising the URL (232) of the first user terminal (204) to the second user terminal (202), whereby the second user terminal (202) uses the URL (232) of the first user terminal (204) obtained from the presence document (238') to subsequently handle communications with the first user terminal (204).

2. The method claimed in claim 1, further comprising the step of:
d. receiving from the second user terminal (202) a subscription for the presence information related to the first user terminal (204), wherein step a. is performed responsive to step d.

3. The method claimed in claim 2, wherein:
step d. comprises receiving from the second user terminal (202) a Session Initiation Protocol (SIP) SUBSCRIBE message (220) addressed to a Mobile Station International Subscriber Directory Number (MSISDN) (222) of the first user terminal (204);
the method further comprising the steps of:
e. relaying the SIP SUBSCRIBE message (220) addressed to the MSISDN (222) of the first user terminal (204) towards the first user terminal (204);
f. responsive to step e., receiving a SIP message informing of the URL (232) of the first user terminal (204); and
g. temporarily storing the URL (232) of the first user terminal (204); and
h. sending a SIP SUBSCRIBE message (234) addressed to the URL (232) of the first user terminal (204) towards the first user terminal (204).

4. A method of communication between a first and second user terminals (202, 204), the method being performed in the second user terminal and comprising the steps of:
a. sending a subscription request message for presence information related to the first user terminal (204), the subscription request message being addressed to a Mobile Station International Subscriber Directory Number (MSISDN) (222) of the first user terminal (204);
b. responsive to the subscription request message, receiving a presence document (238') comprising presence information related to the first user terminal (204), the presence document (238') further comprising a Uniform Resource Locator (URL) (232) of the first user terminal (204); and
c. using the URL (232) of the first user terminal (204) obtained from the presence document (238') of the first user terminal (204) to handle a communication with the first user terminal (204).

5. The method of communication claimed in claim 4, wherein:
the subscription request message comprises a Session Initiation Protocol (SIP) SUBSCRIBE message (220) comprising the MSISDN (222) of the first user terminal (204).

6. The method of communication claimed in claim 4, wherein:
step c. comprises initiating a new communication (260) with the first user terminal (204) using the URL (232) obtained from the presence document (238') related to the first user terminal (204).

7. The method of communication claimed in claim 4, wherein:
step c. comprises handling an incoming communication (270) from the first user terminal (204) using the URL (232) obtained from the presence document (238') related to the first user terminal (204).

8. The method of communication claimed in claim 7, wherein:
handling the incoming communication (270) from the first user terminal (204) comprises displaying a caller identifier information using the URL (232) obtained from the presence document (238') related to the first user terminal (204).

9. The method of communication claimed in claim 7, wherein:
handling the incoming communication (270) from the first user terminal (204) comprises forwarding the incoming communication (270) using the URL (232) obtained from the presence document (238') related to the first user terminal (204).

10. A computer-operated telecommunication node (300) comprising:
a communication module (304) receiving a presence document (238) comprising presence information related to a first user terminal (204); and
a service logic module (306) inserting in the presence document (238) a Uniform Resource Locator (URL) (232) of the first user terminal (204);
the communication module (304) sending the presence document (238') comprising the URL (232) of the first user terminal (204) to a second user terminal (202), whereby the second user terminal (202) uses the URL (232) of the first user terminal (204) obtained from the presence document (238') to subsequently handle communications with the first user terminal (204).

11. The computer-operated telecommunication node (300) claimed of claim 10, wherein before the presence document (238) is received, the communication module (304) receives from the second user terminal (202) a subscription for the presence information related to the first user terminal (204).

12. The computer-operated telecommunication node (300) claimed of claim 11, further comprising:
a data storage module (308);
the communication module (304) comprising a Session Initiation Protocol (SIP) module (302), and the subscription request message comprising a SIP SUBSCRIBE message (220) addressed to a Mobile Station International Subscriber Directory Number (MSISDN) (222) of the first user terminal (204), wherein the SIP module (302) further receives a SIP message informing of the URL (232) of the first user terminal (204), the URL (232) of the first user terminal (204) being temporarily stored in the data storage module (308').

13. The computer-operated telecommunication node (300) claimed in claim 10, wherein the communication module (304) further receives from the second user a communication destined to the URL (232) of the first user terminal (204), whereby the communication is initiated using the URL (232) of the first user terminal (204) sent in the presence document (238).

14. The computer-operated telecommunications node (300) of claim 8, comprising an Instant Messaging and Presence (IMPS) Interworking Gateway (208) for interworking between an IP Multimedia Subsystem (IMS) network (201) and an IMPS network (203).

15. A User Equipment (UE) (202) comprising:
a communication module (405) sending a subscription request message for presence information related to another UE (204), the subscription request message being addressed to a Mobile Station International Subscriber Directory Number (MSISDN) (222) of the other UE (204), the communication module (405), responsive to the subscription request message, receiving a presence document (238) comprising presence information related to the other UE (204), the presence document (238') further comprising a Uniform Resource Locator (URL) (232) of the other UE (204); and
a presence module (404) storing the presence document received from the communication module (405);
the communication module (405) further using the URL (232) of the other UE (204) obtained from the presence document (238') to handle communications with the other UE (204).

16. The UE (202) claimed in claim 15, wherein the communication module (405) comprises a Session Initiation Protocol (SIP) client module (402) for handling SIP communications and the subscription request message comprises a SIP SUBSCRIBE message (220) addressed to the MSISDN (222) of the other UE (204).

17. The UE (202) claimed in claim 15, wherein the communication module (405) initiates a new communication with the other UE (204) using the URL (232) obtained from the presence document (238') related to the other UE (204).

18. The UE (202) claimed in claim 15, wherein the communication module (405) uses the URL (232) of the other UE (204) to handle an incoming communication (270) from the other UE (204).

19. The UE (202) claimed in claim 18, wherein handling the incoming communication (270) from the other UE (204) comprises displaying caller identifier information using the URL (232) obtained from the presence document (238') related to the other UE (204).

20. The UE (202) claimed in claim 18, wherein handling the incoming communication (270) from the other UE (204) comprises forwarding the incoming communication (270) using the URL (232) obtained from the presence document (238') related to the other UE (204).

## Patentansprüche

1. Verfahren zur Kommunikation zwischen einem ersten und einem zweiten Benutzerendgerät (202, 204), umfassend die Schritte:
a. Empfangen eines Präsenzdokuments (238), das Präsenzinformationen umfasst, die auf das erste Benutzerendgerät (204) bezogen sind;
b. Einfügen, in das Präsenzdokument (238), einer uniformen Ressourcenortskennung (URL) (232) des ersten Benutzerendgeräts (204); und
c. Senden des Präsenzdokuments (238), das die URL (232) des ersten Benutzerendgeräts (204) umfasst, zu dem zweiten Benutzerendgerät (202), wodurch das zweite Benutzerendgerät (202) die URL (232) des ersten Benutzerendgeräts (204) verwendet, die aus dem Präsenzdokument (238') erhalten ist, um nachfolgend Kommunikationen mit dem ersten Benutzerendgerät (204) zu verwalten.

2. Verfahren gemäß Anspruch 1, weiterhin umfassend den Schritt:
d. Empfangen, von dem zweiten Benutzerendgerät (202), eine Bezugsanforderung für die Präsenzinformationen, die auf das erste Benutzerendgerät (204) bezogen sind, wobei Schritt a. als Antwort auf Schritt d. durchgeführt wird.

3. Verfahren gemäß Anspruch 2, wobei:
Schritt d. ein Empfangen, von dem zweiten Benutzerendgerät (202), einer SUBSCRIBE Nachricht (220) des Sitzungsinitiierungsprotokolls (SIP) umfasst, die an eine internationale Teilnehmerverzeichnisnummer der Mobilstation (MSISDN) (222) des ersten Benutzerendgeräts (204) adressiert ist;
wobei das Verfahren weiterhin die Schritte umfasst:
e. Weiterleiten der SIP SUBSCRIBE Nachricht (220), die an die MSISDN (222) des ersten Benutzerendgeräts (204) adressiert ist, zu dem ersten Benutzerendgerät (204);
f. in Antwort auf Schritt e., Empfangen einer SIP Nachricht, die die URL (232) des ersten Benutzerendgeräts (204) mitteilt; und
g. zeitweise Speichern der URL (232) des ersten Benutzerendgeräts (204);
und
h. Senden einer SIP SUBSCRIBE Nachricht (234), die an die URL (232) des ersten Benutzerendgeräts (234) adressiert ist, zu dem ersten Benutzerendgerät (204).

4. Verfahren zur Kommunikation zwischen einem ersten und einem zweiten Benutzerendgerät (202, 204), wobei das Verfahren in dem zweiten Benutzerendgerät durchgeführt wird und die Schritte umfasst:
a. Senden einer Bezugsanforderungsnachricht für Präsenzinformationen, die auf das erste Benutzerendgerät (204) bezogen sind, wobei die Bezugsanforderungsnachricht an eine internationale Teilnehmerverzeichnisnummer der Mobilstation (MSISDN) (222) des ersten Benutzerendgeräts (204) adressiert ist;
b. in Antwort auf die Bezugsanforderungsnachricht, Empfangen eines Präsenzdokuments (238'), das Präsenzinformationen umfasst, die auf das erste Benutzerendgerät (204) bezogen sind, wobei das Präsenzdokument (238') weiterhin eine uniforme Ressourcenortskennung (URL) (232) des ersten Benutzerendgeräts (204) umfasst; und
c. Verwenden der URL (232) des ersten Benutzerendgeräts (204), die aus dem Präsenzdokument (238') des ersten Benutzerendgeräts (204) erhalten ist, um eine Kommunikation mit dem ersten Benutzerendgerät (204) zu verwalten.

5. Verfahren zur Kommunikation gemäß Anspruch 4, wobei:
die Bezugseanforderungsnachricht eine SUBSCRIBE Nachricht (220) des Sitzungsinitiierungsprotokolls (SIP) umfasst, die die MSISDN (222) des ersten Benutzerendgeräts (204) umfasst.

6. Verfahren zur Kommunikation gemäß Anspruch 4, wobei:
Schritt c. ein Initiieren einer neuen Kommunikation (260) mit dem ersten Benutzerendgerät (204) unter Verwendung der URL (232) umfasst, die aus dem Präsenzdokument (238') erhalten ist, das auf das erste Benutzerendgerät (204) bezogen ist.

7. Verfahren zur Kommunikation gemäß Anspruch 4, wobei:
Schritt c. ein Verwalten einer ankommenden Kommunikation (270) von dem ersten Benutzerendgerät (204) unter Verwendung der URL (232) umfasst, die aus dem Präsenzdokument (238') erhalten ist, das auf das erste Benutzerendgerät (204) bezogen ist.

8. Verfahren zur Kommunikation gemäß Anspruch 7, wobei:
das Verwalten der ankommenden Kommunikation (270) von dem ersten Benutzerendgerät (204) ein Anzeigen einer Anruferkennungsinformation unter Verwendung der URL (232) umfasst, die aus dem Präsenzdokument (238') erhalten ist, das auf das erste Benutzerendgerät (204) bezogen ist.

9. Verfahren zur Kommunikation gemäß Anspruch 7, wobei:
das Verwalten der ankommenden Kommunikation (270) von dem ersten Benutzerendgerät (204) ein Weiterleiten der ankommenden Kommunikation (270) unter Verwendung der URL (232) umfasst, die aus dem Präsenzdokument (238') erhalten ist, das auf das erste Benutzerendgerät (204) bezogen ist.

10. Computergesteuerter Telekommunikationsknoten (300) umfassend:
ein Kommunikationsmodul (304), das ein Präsenzdokument (238) empfängt, das Präsenzinformationen umfasst, die auf ein erstes Benutzerendgerät (204) bezogen sind; und
ein Dienstlogikmodul (306), das in das Präsenzdokument (238) eine uniforme Ressourcenortskennung (URL) (232) des ersten Benutzerendgeräts (204) einfügt;
wobei das Kommunikationsmodul (304) das Präsenzdokument (238'), das die URL (232) des ersten Benutzerendgeräts (204) umfasst, zu einem zweiten Benutzerendgerät (202) sendet, wodurch das zweite Benutzerendgerät (202) die URL (232) des ersten Benutzerendgeräts (204) verwendet, die aus dem Präsenzdokument (238') erhalten ist, um nachfolgend Kommunikationen mit dem ersten Benutzerendgerät (204) zu verwalten.

11. Computergesteuerter Telekommunikationsknoten (300) gemäß Anspruch 10, wobei, bevor das Präsenzdokument (238) empfangen wird, das Kommunikationsmodul (304) von dem zweiten Benutzerendgerät (202) eine Bezugsanforderung für die Präsenzinformationen empfängt, die auf das erste Benutzerendgerät (204) bezogen sind.

12. Computergesteuerter Telekommunikationsknoten (300) gemäß Anspruch 11, weiterhin umfassend:
ein Datenspeichermodul (308);
wobei das Kommunikationsmodul (304) ein Sitzungsinitiierungsprotokoll- (SIP) -Modul (302) umfasst, und die Bezugsanforderungsnachricht eine SIP SUBSCRIBE Nachricht (220) umfasst, die an eine internationale Teilnehmerverzeichnisnummer der Mobilstation (MSISDN) (222) des ersten Benutzerendgeräts (204) adressiert ist, wobei das SIP-Modul (302) weiterhin eine SIP Nachricht empfängt, die die URL (232) des ersten Benutzerendgeräts (204) mitteilt, wobei die URL (232) des ersten Benutzerendgeräts (204) temporär in dem Datenspeichermodul (308') gespeichert wird.

13. Computergesteuerter Telekommunikationsknoten (300) gemäß Anspruch 10, wobei das Kommunikationsmodul (304) weiterhin von dem zweiten Benutzer eine Kommunikation empfängt, die für die URL (232) des ersten Benutzerendgeräts (204) bestimmt ist, wobei die Kommunikation unter Verwendung der URL (232) des ersten Benutzerendgeräts (204) initiiert wird, die in dem Präsenzdokument (238) gesendet ist.

14. Computergesteuerter Telekommunikationsknoten (300) gemäß Anspruch 8, umfassend ein Interworking-Gateway (208) für Instant Messaging und Präsenz (IMPS) zur Zwischenverbindung zwischen einem Netzwerk (201) des IP-Multimediauntersystems (IMS) und einem IMPS-Netzwerk (203).

15. Benutzereinrichtung (UE) (202) umfassend:
ein Kommunikationsmodul (405), das eine Bezugsanforderungsnachricht für Präsenzinformationen sendet, die sich auf eine andere UE (204) beziehen, wobei die Bezugsanforderungsnachricht an eine internationale Teilnehmerverzeichnisnummer der Mobilstation (MSISDN) (222) der anderen UE (204) adressiert ist, wobei das Kommunikationsmodul (405) in Antwort auf die Bezugsanforderungsnachricht ein Präsenzdokument (238) empfängt, das Präsenzinformationen umfasst, die auf die andere UE (204) bezogen sind, wobei das Präsenzdokument (238') weiterhin eine uniforme Ressourcenortskennung (URL) (232) der anderen UE (204) umfasst; und
ein Präsenzmodul (404), das das Präsenzdokument speichert, das von dem Kommunikationsmodul (405) empfangen ist;
wobei das Kommunikationsmodul (405) weiterhin die URL (232) der anderen UE (204) verwendet, die aus dem Präsenzdokument (238') erhalten ist, um Kommunikationen mit der anderen UE (204) zu verwalten.

16. UE (202) gemäß Anspruch 15, wobei das Kommunikationsmodul (405) ein Sitzungsinitiierungsprotokoll- (SIP) -Clientmodul (402) zum Verwalten von SIP Kommunikationen umfasst, und die Bezugsanforderungsnachricht eine SIP SUBSCRIBE Nachricht (220) umfasst, die an die MSISDN (222) der anderen UE (204) adressiert ist.

17. UE (202) gemäß Anspruch 15, wobei das Kommunikationsmodul (405) eine neue Kommunikation mit der anderen UE (204) unter Verwendung der URL (232) initiiert, die aus dem Präsenzdokument (238') erhalten ist, das auf die andere UE (204) bezogen ist.

18. UE (202) gemäß Anspruch 15, wobei das Kommunikationsmodul (405) die URL (232) der anderen UE (204) verwendet, um eine ankommende Kommunikation (270) von der anderen UE (204) zu verwalten.

19. UE (202) gemäß Anspruch 18, wobei das Verwalten der ankommenden Kommunikation (270) von der anderen UE (204) ein Anzeigen von Anruferkennungsinformationen unter Verwendung der URL (232) umfasst, die aus dem Präsenzdokument (238') erhalten ist, das auf die andere UE (204) bezogen ist.

20. UE (202) gemäß Anspruch 18, wobei das Verwalten der ankommenden Kommunikation (270) von der anderen UE (204) ein Weiterleiten der ankommenden Kommunikation (270) unter Verwendung der URL (232) umfasst, die aus dem Präsenzdokument (238') erhalten ist, das auf die andere UE (204) bezogen ist.

## Revendications

1. Procédé de communication entre un premier et un second terminal d'utilisateur (202,204), comprenant les étapes consistant à :
a. recevoir un document de présence (238) comprenant une information de présence relative au premier terminal d'utilisateur (204) ;
b. insérer dans le document de présence (238) une adresse URL (232) du premier terminal d'utilisateur (204) ; et
c. envoyer le document de présence (238) comprenant l'URL (232) du premier terminal d'utilisateur (204) au second terminal d'utilisateur (202), moyennant quoi le second terminal d'utilisateur (202) utilise l'URL (232) du premier terminal d'utilisateur (204) obtenu à partir du document de présence (238') pour gérer ensuite les communications avec le premier terminal d'utilisateur (204).

2. Procédé selon la revendication 1, comprenant en outre l'étape consistant à :
d. recevoir à partir du second terminal d'utilisateur (202) un abonnement pour l'information de présence relative au premier terminal d'utilisateur (204), dans lequel l'étape a. est effectuée en réponse à l'étape d.

3. Procédé selon la revendication 2, dans lequel :
l'étape d. comprend la réception à partir du second terminal d'utilisateur (202) d'un message SUBSCRIBE (220) du protocole d'amorce de session (SIP) adressé à un numéro d'annuaire d'abonné international de station mobile (MSISDN)(222) du premier terminal d'utilisateur (204) ;
le procédé comprenant en outre les étapes consistant à :
e. relayer le message SUBSCRIBE SIP (220) adressé au MSISDN (222) du premier terminal d'utilisateur (204) vers le premier terminal d'utilisateur (204) ;
f. en réponse à l'étape e., recevoir un message SIP informant de l'URL (232) du premier terminal d'utilisateur (204) ; et
g. mémoriser temporairement l'URL (232) du premier terminal d'utilisateur (204) ; et
h. envoyer un message SUBSCRIBE SIP (234) adressé à l'URL (232) du premier terminal d'utilisateur (204) vers le premier terminal d'utilisateur (204).

4. Procédé de communication entre un premier et un second terminal d'utilisateur (202,204), le procédé étant mis en oeuvre dans le second terminal d'utilisateur et comprenant les étapes consistant à :
a. envoyer un message de demande d'abonnement pour une information de présence relative au premier terminal d'utilisateur (204), le message de demande d' abonnement étant adressé à un numéro d'annuaire d'abonné international de station mobile (MSISDN)(222) du premier terminal d'utilisateur (204) ;
b. en réponse au message de demande d' abonnement, recevoir un document de présence (238') comprenant une information de présence relative au premier terminal d'utilisateur (204), le document de présence (238') comprenant en outre une adresse URL (232) du premier terminal d'utilisateur (204) ; et
c. utiliser l'URL (232) du premier terminal d'utilisateur (204) obtenu d'après le document de présence (238') du premier terminal d'utilisateur (204) pour gérer une communication avec le premier terminal d'utilisateur (204).

5. Procédé de communication selon la revendication 4, dans lequel :
le message de demande d' abonnement comprend un message SUBSCRIBE (220) de protocole d'amorce de session (SIP) comprenant le MSISDN (222) du premier terminal d'utilisateur (204).

6. Procédé de communication selon la revendication 4, dans lequel :
l'étape c. comprend l'amorce d'une nouvelle communication (260) avec le premier terminal d'utilisateur (204) en utilisant l'URL (232) obtenu d'après le document de présence (238') relatif au premier terminal d'utilisateur (204).

7. Procédé de communication selon la revendication 4, dans lequel :
l'étape c. comprend la gestion d'une communication entrante (270) depuis le premier terminal d'utilisateur (204) en utilisant l'URL (232) obtenu d'après le document de présence (238') relatif au premier terminal d'utilisateur (204).

8. Procédé de communication selon la revendication 7, dans lequel :
gérer la communication entrante (270) depuis le premier terminal d'utilisateur (204) comprend l' affichage d'une information d'identifiant d'appelant en utilisant l'URL (232) obtenue d'après le document de présence (238') relatif au premier terminal d'utilisateur (204).

9. Procédé de communication selon la revendication 7, dans lequel :
gérer la communication entrante (270) depuis le premier terminal d'utilisateur (204) comprend l' acheminement de la communication entrante (270) en utilisant l'URL (232) obtenue d'après le document de présence (238') relatif au premier terminal d'utilisateur (204).

10. Noeud de télécommunication exploité informatiquement (300) comprenant :
un module de communication (304) recevant un document de présence (238) comprenant une information de présence relative à un premier terminal d'utilisateur (204) ; et
un module de logique de service (306) insérant dans le document de présence (238) une adresse URL (232) du premier terminal d'utilisateur (204) ;
le module de communication (304) envoyant le document de présence (238') comprenant l'URL (232) du premier terminal d'utilisateur (204) à un second terminal d'utilisateur (202), moyennant quoi le second terminal d'utilisateur (202) utilise l'URL (232) du premier terminal d'utilisateur (204) obtenu d'après le document de présence (238') pour gérer ensuite les communications avec le premier terminal d'utilisateur (204).

11. Noeud de télécommunication exploité informatiquement (300) selon la revendication 10, dans lequel avant que le document de présence (238) soit reçu, le module de communication (304) reçoit du second terminal d'utilisateur (202) un abonnement pour l'information de présence relative au premier terminal d'utilisateur (204).

12. Noeud de télécommunication exploité informatiquement (300) selon la revendication 11, comprenant en outre :
un module de mémorisation de données (308) ;
le module de communication (304) comprenant un module (302) de protocole d'amorce de session (SIP) et le message de demande d'abonnement comprend un message SUBSCRIBE SIP (220) adressé à un numéro d'annuaire d'abonné international de station mobile (MSISDN)(222) du premier terminal d'utilisateur (204), dans lequel le module SIP (302) reçoit en outre un message SIP informant de l'URL (232) du premier terminal d'utilisateur (204), l'URL (232) du premier terminal d'utilisateur (204) étant temporairement mémorisé dans le module de mémorisation de données (308').

13. Noeud de télécommunication exploité informatiquement (300) selon la revendication 10, dans lequel le module de communication (304) reçoit en outre depuis le second utilisateur une communication destinée à l'URL (232) du premier terminal d'utilisateur (204), moyennant quoi la communication est amorcée en utilisant l'URL (232) du premier terminal d'utilisateur (204) envoyé dans le document de présence (238).

14. Noeud de télécommunication exploité informatiquement (300) selon la revendication 8, comprenant une passerelle d'interfonctionnement (208) de présence et messagerie instantanée (IMPS) à des fins d'interfonctionnement entre un réseau de sous-système multimédia IP (IMS)(201) et un réseau IMPS (203).

15. Equipement d'utilisateur (UE)(202) comprenant :
un module de communication (405) envoyant un message de demande d'abonnement pour une information de présence relative à un autre UE (204), le message de demande d'abonnement étant adressé à un numéro d'annuaire d'abonné international de station mobile (MSISDN)(222) de l'autre UE (204), le module de communication (405), en réponse au message de demande d'abonnement, recevant un document de présence (238) comprenant une information de présence relative à l'autre UE (204), le document de présence (238') comprenant en outre une adresse URL (232) de l'autre UE (204) ; et
un module de présence (404) mémorisant le document de présence reçu depuis le module de communication (405) ;
le module de communication (405) utilisant en outre l'URL (232) de l'autre UE (204) obtenue d'après le document de présence (238') pour gérer les communications avec l'autre UE (204).

16. UE (202) selon la revendication 15, dans lequel le module de communication (405) comprend un module client (402) de protocole d'amorce de session (SIP) pour gérer les communications SIP et le message de demande d'abonnement comprend un message SUBSCRIBE SIP (220) adressé au MSISDN (222) de l'autre UE (204).

17. UE (202) selon la revendication 15, dans lequel le module de communication (405) amorce une nouvelle communication avec l'autre UE (204) en utilisant l'URL (232) obtenu d'après le document de présence (238') relatif à l'autre UE (204).

18. UE (202) selon la revendication 15, dans lequel le module de communication (405) utilise l'URL (232) de l'autre UE (204) pour gérer une communication entrante (270) depuis l'autre UE (204).

19. UE (202) selon la revendication 18, dans lequel gérer la communication entrante (270) depuis l'autre UE (204) comprend l'affichage d'information d'identifiant d'appelant en utilisant l'URL (232) obtenu d'après le document de présence (238') relatif à l'autre UE (204).

20. UE (202) selon la revendication 18, dans lequel gérer la communication entrante (270) depuis l'autre UE (204) comprend l'acheminement de la communication entrante (270) en utilisant l'URL (232) obtenu depuis le document de présence (238') relatif à l'autre UE (204).
